# EUROPEAN PATENT SPECIFICATION

(11) **EP 0 735 313 B1**
(45) Date of publication and mention of the grant of the patent: **12.07.2000**
(21) Application number: 95850069.6
(22) Date of filing: 31.03.1995
(51) Int. Cl.: F21V 8/00

(54) **Illumination devices**
Beleuchtungsvorrichtungen
Dispositifs d'éclairage

(43) Date of publication of application: 02.10.1996
(73) Proprietor: Johanson, Walter A., St. Paul, Minnesota 55101 (US)
(72) Inventor: Johanson, Walter A., St. Paul, Minnesota 55101 (US)
(74) Representative: Rostovanyi, Peter

(56) References cited:
- EP-A- 0 290 267

## Description

### Background of the Invention

The present invention relates to light conducting and light emitting tubes, herein referred to as "light tubes". More particularly, the present invention is concerned with laminated tube construction and methods of constructing light tubes to achieve a wide range of illumination effects including the piping of light from an accessible, concentrated light source to distal areas and the release of such light in widely variable patterns.

Optical light films (OLFs) can be efficiently manufactured from polymers in flat, flexible, but fragile films and made to perform a myriad of illumination functions. The film can be formed into various tubular and other partially closed configurations by supporting it together with supplemental light controlling films or elements in preformed carrier tubing having light-permeable characteristics. For example, a sheet of OLF can be formed into a closed tube by disposing one longitudinal edge of the OLF adjacent the opposite longitudinal edge. Alternatively, a sheet of OLF can also be formed into a partially closed tube, for example having an arched cross-section, and maintained in such a configuration with a supporting structure. As used herein, the term "tube" is used broadly to include both closed and partially closed configurations.

In addition to carrying light from a source of illumination, such as a high-intensity light bulb, to a remote location, light tubes can also be used for emitting light over relatively large areas. For this purpose, various methods have been devised to direct light out of a light tube over portions of the tube length. One method involves placing a clear adhesive tape on the outer, grooved side of an optical light film. A clear tape placed in this manner reduces the internal reflectance of the optical light film in the taped area and essentially creates a window for "escaping" light. Another method simply involves removing a section of the optical light film where internal reflectance is not desired. Portions of a tube lacking optical light film will permit light to escape. A third method comprises forming a light tube with some means for directing the light at the walls of the optical light film at an angle greater than about 28°. At such angles of incidence, the internal reflectance of the optical light film is greatly reduced. For example, the 3M Company of St. Paul, Minnesota, produces a product marketed under the name "X-70" which directs incident light at an angle of about 90° to the angle of incidence. If a piece of "X-70" is positioned within a light tube, light moving generally along the longitudinal axis of the tube will be directed through the "X-70" substantially perpendicular toward a sidewall and out of the light tube. Another product, marketed under the name "**SCOTCH-CAL EXTRACTOR FILM™**", directs light toward and through an opposite interior wall.

Since optical light film is fragile and sensitive to dirt and moisture, it is typically positioned within protective, outer tubes. Such tubes are generally transparent and can have a variety of finishes, e.g. clear, matte, colored or opaque. The ability to insert the fragile optical light films into a carrier tubing, typically an extrusion product, is an impediment to the light tube designer. Moreover, shipping fabricated light tubes is costly because of their high volume relative to volume of component displacement and their inherent vulnerability to damage by breaking and scratching. Thus the low manufacturing cost of the critical optical film component is heavily offset by shipping costs. Also lost is the ability of the designer to achieve at acceptable cost finished products which feature many of the useful and underlying lighting functions which the optical light film is inherently capable of performing.

A collapsible light pipe of flexible materials which may be collapsed into a flat state for shipping is disclosed in EP-A-0 290 267.

It would therefore be desirable to provide novel methods for forming light tubes and light tube products using the films which are cost effective, optically efficient and functionally varied.

### Summary of the Invention

The present invention comprises improvements in methods of forming light carriers and the resulting light carriers comprising optical light film.

One embodiment of the present invention comprises a first sheet of optical light film connected to an outer, protective sheet of a second material in an area remote from the edges of the two sheets. The opposing longitudinal edges of both sheets are configured such that the second edge of the optical light film is positioned between the first edge of optical light film and the first edge of the outer protective sheet while the second edge of the outer protective sheet is connected with a first edge region of the protective sheet. This light tube provides a sheet of optical light film substantially surrounded by an outer, protective sheet which facilitates maintaining the optical light film in a clean, dry and optically efficient condition.

Another aspect of the present invention comprises connecting two sheets in a manner similar to that described above and disposing at least one sheet of optical light film between the two sheets. These and other embodiments of the present invention are described in further detail below.

### Brief Description of the Drawings

Figure 1 is a perspective view of a light tube and bulb of one embodiment of the present invention.

Figures 2 and 3 are cross-sectional views of one embodiment of a light tube of the present invention.

Figures 4 and 5 are cross-sectional views illustrating another embodiment of an optical light tube of the present invention.

### Detailed Description

One embodiment of the present invention is directed to a light carrier comprising at least one sheet of optical light film 10 which is maintained in a tube configuration by a novel joint. The optical light film preferably has enough flexibility and sufficient width so that one longitudinal edge 11 can be moved to a position proximate the other longitudinal edge 12 thereby forming a tube, preferably having a generally cylindrical shape. Unless otherwise specified, the term "optical light film" is used herein to refer to flexible films having a surface comprising a plurality of substantially triangular grooves which reflect substantially all of the light incident on the opposite side of the film at an angle of less than about 28° when formed into a light tube. Such film is available from the 3M Corporation, St. Paul, Minnesota.

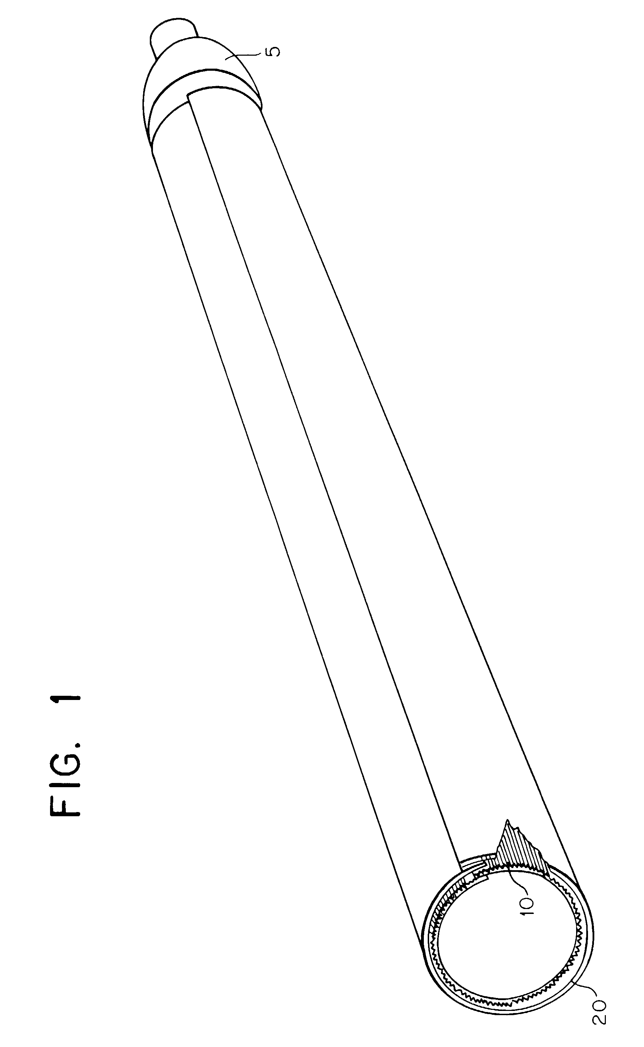

Figure 1 generally illustrates one embodiment of the present invention comprising a light bulb 5 operatively connected with a light tube formed with a sheet of optical light film 10 configured into a substantially cylindrical shape and surrounded by an outer, protective sheet 20. The outer protective sheet may comprise a transparent, flexible polymeric material. Those skilled in the art will appreciate that the protective sheet is not necessarily transparent and can have other finishes including matte, colored or opaque. It will also be appreciated that the thicknesses of the optical light film and the protective sheets can be varied in accordance with the design parameters, including tube diameter.

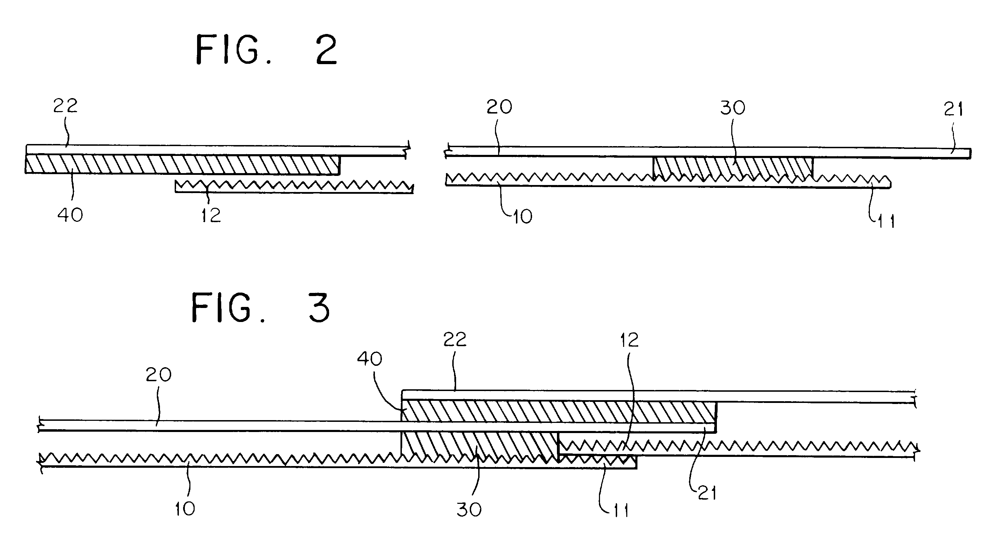

The manner of forming one light tube of the present invention is best illustrated with reference to Figures 2 and 3 wherein an optical light film 10 is protected by an outer protective sheet 20 with a use of first connector 30 and a second connector 40. In the manner illustrated in Figure 2, the first connector 30 is most preferably disposed slightly remote from longitudinal edge portion 11 and is also preferably connected to the outer protective sheet 20 at a contact region slightly remote from a first longitudinal edge 21. In this manner, a slot is defined by the outer surface of edge region 11 of optical light film 10, the connector 30 and the inner side of edge region 21 of protective sheet 20. Therefore, when optical light film 10 is configured into a tube and the second longitudinal edge region 12 is brought around proximate longitudinal edge 11, the second longitudinal edge region 12 can be readily inserted into the slot. In order to maintain the opposing edges of the outer protective sheet 20 in position, a second connector 40 is preferably positioned between the outer surface of protective sheet 20 proximate first longitudinal edge 21 and the inner surface of protective sheet 20 proximate the second longitudinal edge 22. As shown in Figure 2, the second connector 40 can readily be positioned prior to configuring the sheets into a tube. Since some adhesive tapes which may be used as connectors with the various embodiments of the present invention are provided with liners which protect the adhesive surface before use, one side of such tapes can be adhered to an optical light film or a protective sheet while leaving the other side of the adhesive tape covered by the protective liner. That liner could then be subsequently removed at a different location prior to final assembly. While one preferred embodiment of this invention aligns the second connector 40 with the opposing edges of protective sheet 20, such alignment is not necessary in order to obtain the benefits of the present invention.

The connectors used to join the sheets of the present invention preferably comprise strips of tape, most preferably a two-sided adhesive tape or a tape exhibiting adhesive properties throughout such that both sides and the edges of the tape are sufficiently sticky. One such tape is a Very High Bond Tape available from the 3M Corporation of St. Paul, Minnesota which exhibits adhesiveness throughout. Particularly a clear Very High Bond Tape designated "4910" is particularly useful for bonding the smooth surfaces of the outer protective sheet 20, while a white Very High Bond Tape having the designation "4952" is particularly useful for connecting the outer, ridged surface of the optical light film to another surface. It has been found that the clear tape has a tendency to withdraw from the grooves on the outer surfaces of an optical light film resulting in a reduction in adhesion. Those skilled in the art will also appreciate that the thickness and/or width of the adhesive tape utilized can be varied for different applications depending upon such factors as the strength required and any thickness characteristics inherent in the particular tube design.

The optical light tubes of the present invention have many practical uses such as those disclosed in co-pending U.S. Patent Application Serial no. 08/055,188 entitled ILLUMINATION DEVICES AND METHODS OF FORMING SAME.

The various embodiments of the present invention can readily be partially or totally assembled at or close to the site of their ultimate use. Assembly at such locations greatly reduces the cost of shipping since the sheets can be shipped in a flat configuration requiring much less volume than assembled tubes. These and other advantages of the present invention will be apparent to those skilled in the art.

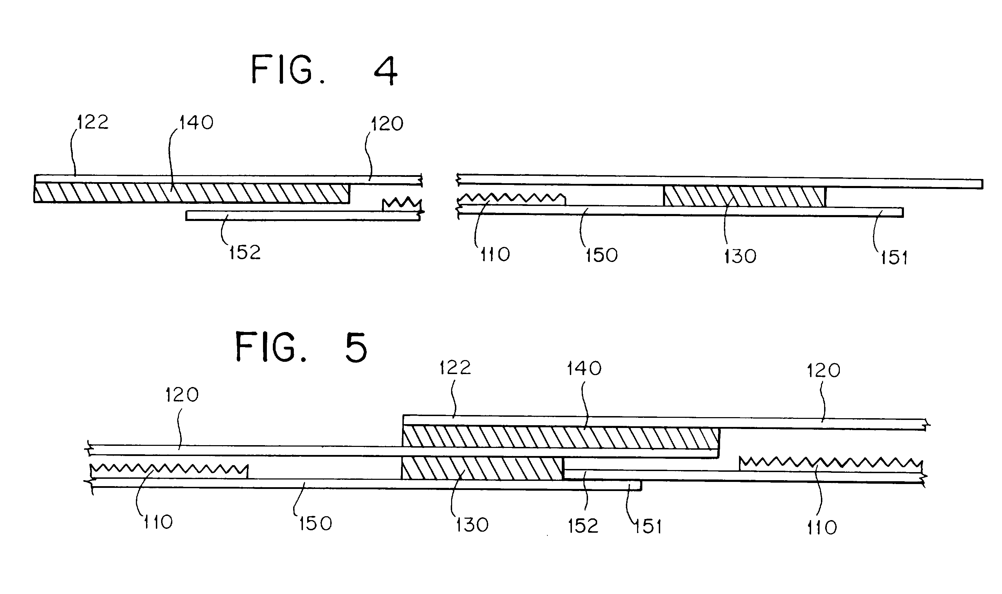

An alternative embodiment of the present invention is illustrated in Figures 4 and 5. In this embodiment, at least one optical light film 110 is substantially sandwiched between an outer protective sheet 120 and a separate inner protective sheet 150. Those skilled in the art will appreciate that inner protective sheet 150 is most preferably clear. The two protective sheets are configured and connected in the same fashion as the optical light film and outer protective sheet illustrated in Figures 2 and 3. A first connector 130 is utilized to connect an outer surface remote from a first edge of region 151 of inner sheet 150 with an inner surface of outer sheet 120 in a manner that forms a slot which receives a second edge portion 152 of inner sheet 150. The second edge 122 of outer sheet 120 is then configured substantially around the inner protective sheet 150 using a second connector 140 while at least one sheet of optical light film 110 is substantially sandwiched between outer sheet 120 and inner sheet 150. Since the protective sheets are not being connected to an optical light film, it is desirable to use a clear Very High Bond Tape such as the "4910" tape referenced above.

This embodiment of the present invention offers several significant advantages. Primarily, a plurality of optical light films can be readily positioned at discrete locations in the tube leaving sections of the tube without optical light film. Those skilled in the art will appreciate that controlled amounts of light and various patterns can be provided by leaving gaps between discrete sheets of optical light film or by providing light films having extractors or holes which permit the "escape" of light from the light tube.

## Claims

1. A light tube for distributing light from a remote source,
**characterized** in
an outer sheet (20;120) and an inner sheet (10;150), wherein said inner sheet is an optical light film (10) or wherein at least one optical light film (110) is disposed between said outer sheet (120) and said inner sheet (150)
said outer sheet (20;120) comprising a first longitudinal edge (21) and a second longitudinal edge (22);
said inner sheet (10;150) comprising a first longitudinal edge portion (11;151) and a second longitudinal edge portion (12;152),
means for maintaining said outer sheet and said inner sheet (10;150) in a tube configuration comprising a first connector (30;130) having at least one adhesive portion, said first connector (30;130) being connected to said outer sheet (20;120) at a position remote from said first longitudinal edge (21) and to said inner sheet at a position remote from said first longitudinal edge portion (11;151) thereby defining a slot;
wherein said second longitudinal edge portion (12;152) is positioned in said slot and said second longitudinal edge (22;122) is secured proximate to said first longitudinal edge (21).

2. A light tube according to claim 1 comprising at least one optical light film disposed between said outer sheet and said inner sheet.

3. A light tube according to claim 1 comprising a plurality of optical light films disposed between said outer sheet and said inner sheet.

4. A light tube according to claim 1 wherein said first connector (30;130) comprises adhesive tape.

5. A light tube according to claim 1 wherein said connector (30;130) comprises a tape having two sides and adhesive properties on both of said sides.

6. A light tube according to claim 1 wherein said second longitudinal edge (22;122) is secured proximate to said first longitudinal edge (21) by a second connector (40;140).

7. A light tube according to claim 6 wherein at least a portion of one edge of said outer sheet (20;120) is disposed in contact with said second connector (40;140).

8. A light tube according to claim 6 wherein at least a portion of both of said longitudinal edges of said outer sheet (20;120) are disposed in contact with said second connector (40;140).

9. A light tube according to claim 1 wherein said first connector (30;130) is connected to said inner sheet (10;150) at a first distance from said longitudinal edge portion (11;151) and to said outer sheet (20;120) at a second distance from said first longitudinal edge (21), and wherein said first distance is less than said second distance.

## Patentansprüche

1. Leuchtröhre zum Verteilen von Licht aus einer entfernten Quelle, gekennzeichnet durch
- eine äußere Schicht (20; 120) und eine innere Schicht (10; 150), wobei die innere Schicht ein optischer Leuchtfilm (10) ist oder wobei wenigstens ein optischer Leuchtfilm (110) zwischen der äußeren Schicht (120) und der inneren Schicht (150) angeordnet ist,
- wobei die äußere Schicht (20; 120) eine erste Längskante (21) und eine zweite Längskante (22) aufweist;
- wobei die innere Schicht (10; 150) einen ersten Längskantenabschnitt (11; 151) und einen zweiten Längskantenabschnitt (12; 152) aufweist;
- ferner Mittel zum Halten der äußeren Schicht und der inneren Schicht (10; 150) in einem röhrenförmigen Gebilde enthaltend ein erstes Verbindungselement (30; 130) mit wenigstens einem klebenden Abschnitt, wobei das erste Verbindungselement (30; 130) mit der äußeren Schicht (20; 120) in einer entfernten Lage zur ersten Längskante (21) und mit der inneren Schicht in einer entfernten Lage zum ersten Längskantenabschnitt (11; 151) verbunden ist und dadurch einen Schlitz begrenzt;
- wobei der zweite Längskantenabschnitt (12; 152) in dem Schlitz angeordnet ist und die zweite Längskante (22; 122) nahe an der ersten Längskante (21) befestigt ist.

2. Leuchtröhre nach Anspruch 1 enthaltend wenigstens einen zwischen der äußeren und der inneren Schicht angeordneten optischen Leuchtfilm.

3. Leuchtröhre nach Anspruch 1 enthaltend eine Vielzahl von zwischen der äußeren und der inneren Schicht angeordneten optischen Leuchtfilmen.

4. Leuchtröhre nach Anspruch 1, wobei das erste Verbindungselement (30; 130) ein Klebeband aufweist.

5. Leuchtröhre nach Anspruch 1, wobei das Verbindungselement (30; 130) ein Band mit zwei Seiten und Klebeeigenschaften auf beiden Seiten aufweist.

6. Leuchtröhre nach Anspruch 1, wobei die zweite Längskante (22; 122) durch ein zweites Verbindungselement (40; 140) nahe an der ersten Längskante (21) befestigt ist.

7. Leuchtröhre nach Anspruch 6, wobei wenigstens ein Abschnitt der einen Kante der äußeren Schicht (20; 120) so angeordnet ist, daß er das zweite Verbindungselement (40; 140) berührt.

8. Leuchtröhre nach Anspruch 6, wobei wenigstens ein Abschnitt der beiden Längskanten der äußeren Schicht (20; 120) so angeordnet ist, daß er das zweite Verbindungselement (40; 140) berührt.

9. Leuchtröhre nach Anspruch 1, wobei das erste Verbindungselement (30; 130) mit der inneren Schicht (10; 150) in einem ersten Abstand zum Längskantenabschnitt (11; 151) und mit der äußeren Schicht (20; 120) in einem zweiten Abstand zur ersten Längskante (21) verbunden ist und wobei der erste Abstand geringer ist als der zweite Abstand.

## Revendications

1. Tube lumineux destiné à distribuer la lumière d'une source distante, caractérisé par
une feuille extérieure (20 ; 120) et une feuille intérieure (10 ; 150), la feuille intérieure étant un film lumineux optique (10), ou un film lumineux optique au moins (110) est placé entre la feuille extérieure (120) et la feuille intérieure (150),
la feuille extérieure (20 ; 120) comprenant un premier bord longitudinal (21) et un second bord longitudinal (22),
la feuille intérieure (10 ; 150) comprenant une première partie de bord longitudinal (11 ; 151) et une seconde partie de bord longitudinal (12 ; 152),
un dispositif destiné à maintenir la feuille extérieure et la feuille intérieure (10 ; 150) à une configuration de tube et comprenant un premier raccord (30 ; 130) ayant au moins une partie adhésive, le premier raccord (30 ; 130) étant raccordé à la feuille extérieure (20 ; 120), à une position distante du premier bord longitudinal (21), et à la feuille intérieure, à une position distante de la première partie de bord longitudinal (11 ; 151), avec délimitation de cette manière d'une fente, et
dans lequel la seconde partie de bord longitudinal (12 ; 152) est disposée dans la fente et le second bord longitudinal (22 ; 122) est fixé prés du premier bord longitudinal (21).

2. Tube lumineux selon la revendication 1, comprenant au moins un film lumineux optique placé entre la feuille extérieure et la feuille intérieure.

3. Tube lumineux selon la revendication 1, comprenant plusieurs films lumineux optiques placés entre la feuille extérieure et la feuille intérieure.

4. Tube lumineux selon la revendication 1, dans lequel le premier raccord (30 ; 130) est un ruban adhésif.

5. Tube lumineux selon la revendication 1, dans lequel le raccord (30 ; 130) est un ruban ayant deux faces et des propriétés adhésives à ses deux faces.

6. Tube lumineux selon la revendication 1, dans lequel le second bord longitudinal (22 ; 122) est fixé à proximité du premier bord longitudinal (21) par un second raccord (40 ; 140).

7. Tube lumineux selon la revendication 6, dans lequel une partie au moins d'un premier bord de la feuille extérieure (20 ; 120) est disposée au contact du second raccord (40 ; 140).

8. Tube lumineux selon la revendication 6, dans lequel une partie au moins des deux bords longitudinaux de la feuille extérieure (20 ; 120) sont placés au contact du second raccord (40 ; 140).

9. Tube lumineux selon la revendication 1, dans lequel le premier raccord (30 ; 130) est raccordé à la feuille intérieure (10 ; 150), à une première distance de la partie de bord longitudinal (11 ; 151), et à la feuille extérieure (20 ; 120), à une seconda distance du premier bord longitudinal (21), et dans lequel la première distance est inférieure à la seconde distance.
